# EUROPEAN PATENT SPECIFICATION

(11) **EP 3 822 862 B1**
(45) Date of publication and mention of the grant of the patent: **19.11.2025**
(21) Application number: 19834594.4
(22) Date of filing: 10.07.2019
(51) Int. Cl.: G06K 19/067

(54) **RFID ELECTRONIC TAG AND PROCESSING METHOD**
ELEKTRONISCHES RFID-ETIKETT UND VERARBEITUNGSVERFAHREN
ÉTIQUETTE ÉLECTRONIQUE RFID ET PROCÉDÉ DE TRAITEMENT

(30) Priority: 10.07.2018 CN 201810752286
(43) Date of publication of application: 19.05.2021
(73) Proprietor: QINGDAO HIGHWAY IOT TECHNOLOGY CO., LTD, Qingdao, Shandong 266042 (CN); MESNAC CO., LTD., Qingdao, Shandong 266042 (CN)
(72) Inventor: DONG, Lanfei, Qingdao, Shandong 266042 (CN); YAO, Yong, Qingdao, Shandong 266042 (CN); CHEN, Haijun, Qingdao, Shandong 266042 (CN)
(74) Representative: Winter, Brandl - Partnerschaft mbB
(86) International application number: PCT/CN2019/095394
(87) International publication number: WO 2020/011188

(56) References cited:
- EP-A1- 3 179 413
- CN-A- 109 063 808
- CN-U- 201 532 644
- CN-U- 202 041 976
- CN-U- 202 758 373
- CN-U- 208 384 610
- JP-A- 2017 016 350
- US-A1- 2004 189 456
- US-A1- 2005 088 361
- US-A1- 2010 108 211
- US-A1- 2012 305 151
- US-A1- 2013 299 597
- US-A2- 2015 311 583

## Description

### FIELD OF THE INVENTION

The invention belongs to the technical field of RFID device, and particularly relates to a RFID electronic tag embedded into tire and a processing method for the RFID electronic tag.

### BACKGROUND

RFID (Radio Frequency Identification) is a technology capable of realizing automatic non-contact identification, which transmits and obtains data through radio frequency signals and automatically identifies target objects. The identification does not require manual intervention and could deal with various harsh environments. Furthermore, RFID technology could identify moving objects at high speed, and also could identify a plurality objects with tags at the same time, which is efficient and also convenient for operation. The RFID system typically comprises: a tag consisting of a coupling element and a chip, a reader which is a device configured to read or write tag information, and antenna configured to transmit radio frequency signals between the tag and the reader.

RFID electronic tag is embedded inside tire during its molding process, which is fully combined with the tire after high-temperature vulcanization and used through the complete lifecycle of the tire to record its data which is gathered for solving problems occurring in sales or in usage, such as anti-counterfeiting, selling beyond agreed areas, claims settlement and the like. RFID electronic tag is communicated with a RF module for sending or receiving data. Due to the fact that bending or deformation of the tire during usage or manufacturing may lead in the separation of the RFID electronic tag, which may be damaged, broken or worn, the optimization of the structure of the electronic tag could effectively improve the robustness of the electronic tag.

Chinese Patent Application CN 103 068 598 A discloses a spring oriented RFID board, in which two asymmetric arms are provided on a printed circuit board (PCB) so as to form recesses at opposite ends of the printed circuit board. Antenna elements spirally wound are positioned within the recesses so that ends of the two asymmetric arms could be positioned to form a closet path adjacent an individual antenna element spirally wound. But the antenna element spirally wound requires to be clamped into the printed circuit board the process is complicated requiring manual operation and could not be automatically produced in large quantities.

US 2013/0299597 A1, against which the claims have been delimited, discloses an RFID tag with U-shaped grooves.

Documents US 2012/0305151 A1, CN 202758373 U, US 2015/0311583 A2, US 2005/0088361 A1 and EP 3 179 413 A1 belong to the further state of the art.

### SUMMARY

In order to solve the above-mentioned technical problems, the present invention provides an RFID electronic tag and a method for processing the RFID electronic tag, which aims at reducing the overall thickness of the RFID electronic tag to the diameter of an antenna approximately, so that the occurrence of bubble during package could be brought down.

The invention is defined by the independent claims.

Preferred embodiments are set out in the dependent claims.

Compared with the prior art, the present invention discloses an RFID electronic tag aiming at reducing the overall thickness of the electronic tag. In the RFID electronic tag of the prior art, the antenna is attached onto the surface of the substrate so the overall thickness of the electronic tag, which is being added the thickness of solder paste, is comparatively high. As such an electronic tag being implanted into a tire, there will be a risk of the occurrence of bubble. The present invention provides two U-shaped grooves on both ends of the substrate to clamp the antennas to reduce the overall thickness of the electronic tag, so as to lower the risk of the occurrence of bubble

Due to the fact that the faces of the electronic tag of the present invention are different, it may encounter failures as being automatically implanted in large quantities.

On the basis of the above-mentioned structure, the present invention further discloses:
the width of the U-shaped groove is greater than or equal to the width of the antenna. Preferably, the width of the U-shaped groove could be designed slightly greater than the width of the antenna because during the process of the RFID electronic tag, solder paste is firstly applied and it may flow to side walls of the U-shaped groove to enable the width of the U-shaped groove to be slightly narrowed. Accordingly, although the width of the U-shaped is slightly larger than the width of the antenna, the antenna and RF module could be soldered on the substrate without being affected.

Further, the pitch of a section of the antenna in the U-shaped groove is smaller than or equal to the pitch of a section of the antenna out of the U-shaped groove. That is to say, the pitch of the welding end of the antenna is comparatively smaller, so the welding area could be increased to enhance the robustness of antenna welding.

Welding pads where the antennas are soldered are respectively provided on the substrate adjacent to both sides of each U-shaped groove. For each U-shaped groove, the welding pads are spaced apart in a groove-width direction of the U-shaped groove, and the U-shaped groove is arranged between the welding pads.

An antenna is being placed at a side end of a U-shaped groove of the substrate and the antenna is being pushed into the U-shaped groove from the side end of the U-shaped groove.

The beneficial effect of the invention is to reduce the overall thickness of the RFID electronic tag equivalent to the thickness of the diameter of the antenna and lower the risk of occurrence of bubble in package process.

### BRIEF DESCRIPTION OF THE DRAWINGS

Fig. 1 is a plan view of an RFID electronic tag in accordance with one or more embodiments of the invention;
Fig. 2 is a front view of an RFID electronic tag in accordance with one or more embodiments of the invention;
Fig. 3 is a schematic structural diagram of an RFID electronic tag a prior art;
Fig. 4 is a schematic structural diagram of an RFID electronic tag before welding in accordance with one or more embodiments of the invention;

In those figures, 1: Substrate; 2: Radio frequency module; 3: Antenna; 5: Connection Area between Antenna and Radio Frequency Module; 6: U-shaped Groove.

### DETAILED DESCRIPTION

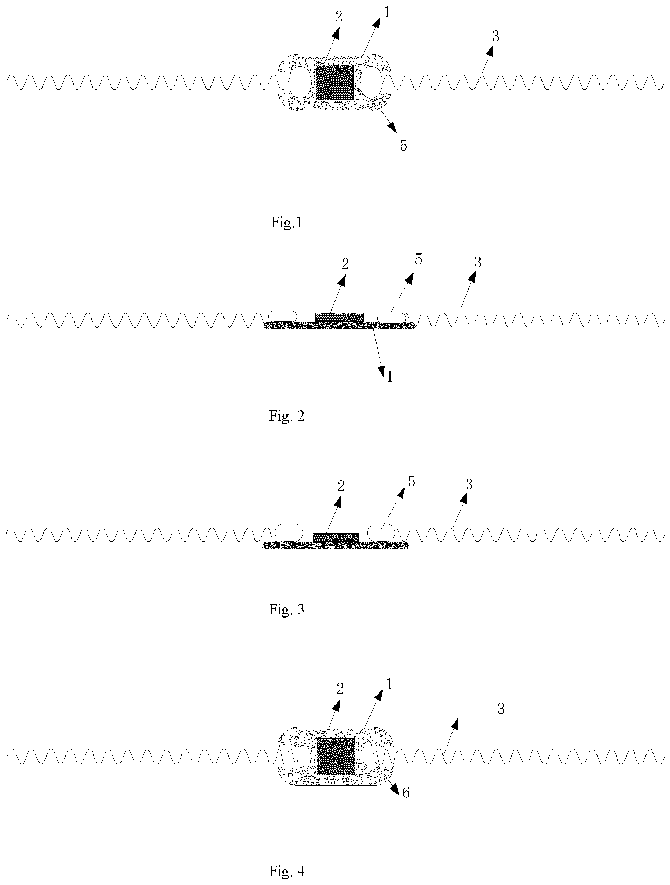

Fig.1 is a plan view of an RFID electronic tag in accordance with one or more embodiments of the invention. The RFID electronic tag includes a substrate 1, an RF module 2 and antennas 3 soldered on the substrate 1. Each end of the substrate 1 is formed a U-shaped groove 6 configured to arrange an antenna 3. Welding pads where the antennas 3 are soldered are respectively provided on the substrate 1 adjacent to both sides of each U-shaped groove 6. The width of the U-shaped groove 6 is greater than or equal to the width of the antenna 3. The pitch of a section of each antenna in the U-shaped groove is smaller than or equal to the pitch of a section of each antenna out of the U-shaped groove, which is shown in Fig.2 and Fig.4.

The tag processing method comprises the following steps:
1) applying solder paste: applying solder paste on a printed substrate;
2) placing chip: mounting on a chip by an SMD (Surface-mounted device), that is to say, a RF module is being directly mounted on the surface of the substrate;
3) arranging antenna: placing one antenna above a U-shaped groove and pressing the antenna down to the U-shaped groove of the substrate;
4) soldering: welding the RF module and the antennas on the substrate by wave soldering or reflow soldering

Additionally, in Step 3), an antenna could be placed in a U-shaped groove by pushing from one side; specifically, an antenna is being placed at a side end of a U-shaped groove of the substrate and the antenna is being pushed into the U-shaped groove from the side end of the U-shaped groove.

Fig.2 shows the connection of an RFID electronic tag of the present invention and Fig. 3 shows the connection of an RFID electronic tag of the prior art. The two figures clearly indicate that the thickness of a connection area between an antenna and an RF module of the present invention, namely the thickness after welding, is significantly smaller than the thickness of a connection area between an antenna and an RF module of the prior art, the thickness reduced is equivalent to the thickness of a substrate.

## Claims

1. An RFID electronic tag including:
a substrate (1);
an RF module (2) and antennas (3) which are soldered on the substrate (1), wherein
each end of the substrate (1) is formed with a U-shaped groove (6) configured to arrange one of the antennas (3), wherein
welding pads where the antennas (3) are soldered are respectively provided on the substrate (1) adjacent to both sides of each U-shaped groove (6), **characterized in that,** for each U-shaped groove (6):
the welding pads are spaced apart in a groove-width direction of the U-shaped groove, wherein the U-shaped groove (6) is arranged between the welding pads.

2. The RFID electronic tag of claim 1, wherein the width of the U-shaped groove (6) is greater than or equal to the width of each antenna (3) of the antennas (3) in a transverse direction.

3. The RFID electronic tag of claim 1, wherein the pitch of a section of each antenna (3) of the antennas (3) in the U-shaped groove (6) is smaller than or equal to the pitch of a section of each antenna (3) of the antennas (3) out of the U-shaped groove (6).

4. An RFID electronic tag processing method, comprising:
1) applying solder paste on a printed substrate (1);
2) mounting a chip, as an SMD, i.e. as a surface-mounted device, on a surface of the substrate (1), namely directly mounting a RF module (2) on the surface of the substrate (1);
3) placing each antenna (3) of antennas (3) above a U-shaped groove (6) formed at each end of the substrate (1) and pressing each antenna (3) of the antennas (3) down to the U-shaped groove (6);
4) welding the RF module (2) and the antennas (3) on the substrate (1) by wave soldering or reflow soldering, wherein
welding pads where the antennas (3) are soldered are respectively provided on the substrate (1) adjacent to both sides of each U-shaped groove (6), **characterized in that,** for each U-shaped groove (6):
the welding pads are spaced apart in a groove-width direction of the U-shaped groove, wherein the U-shaped groove (6) is arranged between the welding pads.

5. The RFID electronic tag processing method of claim 4, wherein
in Step 3), an antenna (3) is being placed at a side end of a U-shaped groove (6) of the substrate (1) and the antenna (3) is being pushed into the U-shaped groove (6) from the side end of the U-shaped groove (6).

## Patentansprüche

1. RFID-Etikett mit
einem Substrat (1);
einem RF-Modul (2) und Antennen (3), die auf das Substrat (1) gelötet sind, wobei
jedes Ende des Substrats (1) mit einer U-förmigen Nut (6) versehen ist, die dazu eingerichtet ist, eine der Antennen (3) aufzunehmen, wobei
Lötpads, auf die die Antennen (3) gelötet sind, jeweils auf dem Substrat (1) angrenzend an beiden Seiten jeder U-förmigen Nut (6) vorgesehen sind, **dadurch gekennzeichnet, dass**
für jede U-förmige Nut (6)
die Lötpads in einer Nutbreitenrichtung der U-förmigen Nut beabstandet sind, wobei die U-förmige Nut (6) zwischen den Lötpads angeordnet ist.

2. RFID-Etikett nach Anspruch 1, wobei eine Breite der U-förmigen Nut (6) größer oder gleich einer Breite jeder Antenne (3) der Antennen (3) in einer Querrichtung ist.

3. RFID-Etikett nach Anspruch 1, wobei der Windungsabstand eines Abschnitts jeder Antenne (3) der Antennen (3) in der U-förmigen Nut (6) kleiner oder gleich dem Windungsabstand eines Abschnitts jeder Antenne (3) der Antennen (3) außerhalb der U-förmigen Nut (6) ist.

4. Verfahren zur Herstellung eines RFID-Etiketts, mit den folgenden Schritten:
1) Aufbringen von Lötpaste auf ein bedrucktes Substrat (1);
2) Montieren eines Chips als SMD, i.e. als oberflächenmontierte Vorrichtung, auf einer Oberfläche des Substrats (1), nämlich direktes Montieren eines RF-Moduls (2) auf der Oberfläche des Substrats (1);
3) Platzieren jeder Antenne (3) der Antennen (3) über einer U-förmigen Nut (6), die an jedem Ende des Substrats (1) ausgebildet ist, und Drücken jeder Antenne (3) der Antennen (3) nach unten in die U-förmige Nut (6);
4) Löten des RF-Moduls (2) und der Antennen (3) auf dem Substrat (1) durch Wellenlöten oder Reflow-Löten, wobei
Lötpads, auf welche die Antennen (3) gelötet sind, jeweils auf dem Substrat (1) angrenzend an beide Seiten jeder U-förmigen Nut (6) vorgesehen sind, **dadurch gekennzeichnet, dass**,
für jede U-förmige Nut (6)
die Lötpads in einer Nutbreitenrichtung der U-förmigen Nut beabstandet sind, wobei die U-förmige Nut (6) zwischen den Lötpads angeordnet ist.

5. Verfahren zur Herstellung eines RFID-Etiketts nach Anspruch 4, wobei
in Schritt 3) eine Antenne (3) an einem seitlichen Ende einer U-förmigen Nut (6) des Substrats (1) platziert und die Antenne (3) von dem seitlichen Ende der U-förmigen Nut (6) in die U-förmige Nut (6) geschoben wird.

## Revendications

1. Étiquette électronique RFID, incluant :
un substrat (1) ;
un module RF (2) et des antennes (3) qui sont soudés sur le substrat (1), dans laquelle
chaque extrémité du substrat (1) est formée avec une rainure en forme de U (6) configurée pour agencer une des antennes (3), dans laquelle
des plots de soudage au niveau desquels les antennes (3) sont soudées, sont disposés respectivement sur le substrat (1) adjacents des deux côtés de chaque rainure en forme de U (6), **caractérisée en ce que,** pour chaque rainure en forme de U (6) :
les plots de soudage sont espacés dans un sens de la largeur de rainure de la rainure en forme de U, dans laquelle la rainure en forme de U (6) est agencée entre les plots de soudage.

2. Étiquette électronique RFID selon la revendication 1, dans laquelle la largeur de la rainure en forme de U (6) est supérieure ou égale à la largeur de chaque antenne (3) des antennes (3) dans une direction transversale.

3. Étiquette électronique RFID selon la revendication 1, dans laquelle le pas d'une section de chaque antenne (3) des antennes (3) dans la rainure en forme de U (6) est inférieur ou égal au pas d'une section de chaque antenne (3) des antennes (3) en dehors de la rainure en forme de U (6).

4. Procédé de traitement d'étiquette électronique RFID, comprenant :
1) l'application d'une pâte à souder sur un substrat imprimé (1) ;
2) le montage d'une puce, en tant que SMD, c'est-à-dire en tant que dispositif monté en surface, sur une surface du substrat (1), à savoir le montage direct d'un module RF (2) sur la surface du substrat (1) ;
3) la mise en place de chaque antenne (3) des antennes (3) au-dessus d'une rainure en forme de U (6) formée au niveau de chaque extrémité du substrat (1) et le pressage de chaque antenne (3) des antennes (3) vers le bas jusqu'à la rainure en forme de U (6) ;
4) le soudage du module RF (2) et des antennes (3) sur le substrat (1) par soudure à la vague ou par soudure par refusion, dans lequel
des plots de soudage au niveau desquels les antennes (3) sont soudées, sont disposés respectivement sur le substrat (1) adjacents des deux côtés de chaque rainure en forme de U (6), **caractérisé en ce que,** pour chaque rainure en forme de U (6) :
les plots de soudage sont espacés dans un sens de la largeur de rainure de la rainure en forme de U, dans lequel la rainure en forme de U (6) est agencée entre les plots de soudage.

5. Procédé de traitement d'étiquette électronique RFID selon la revendication 4, dans lequel
à l'étape 3), une antenne (3) est placée au niveau d'une extrémité latérale d'une rainure en forme de U (6) du substrat (1), et l'antenne (3) est poussée dans la rainure en forme de U (6) à partir de l'extrémité latérale de la rainure en forme de U (6).
